# EUROPÄISCHE PATENTANMELDUNG

(11) **EP 4 677 980 A1**
(43) Veröffentlichungstag der Anmeldung: **14.01.2026**
(21) Anmeldenummer: 25184357.9
(22) Anmeldetag: 23.06.2025
(51) Int. Cl.: A01B 59/041

(54) **AUFHÄNGUNG FÜR EIN ANBAUGERÄT UND DAMIT AUSGESTATTETER TRAKTOR**

(30) Priorität: 10.07.2024 DE 102024119521
(71) Anmelder: CLAAS Tractor S.A.S., 78141 Vélizy-Villacoublay Cedex (FR)
(72) Erfinder: Martin, Antoine, 92320 Chatillon (FR); Chartier, Aurélien, 78440 Issou (FR); Riault, Edouard, 78530 BUC (FR)
(74) Vertreter: CLAAS Gruppe

(57) **Zusammenfassung**

Ein Traktor umfasst wenigstens eine, vorzugsweise zwei komplementäre Aufhängungen für ein Anbaugerät. Die Aufhängung umfasst: einen als auch Unterlenker bezeichneten ersten Arm (2), der ausgelegt ist, um an einem ersten Anschlusspunkt (4) mit dem Traktor (1) und an einem in einer ersten Längsrichtung (L) beabstandeten zweiten Anschlusspunkt (7) mit dem Anbaugerät verbunden zu werden, einen auch als Seitenstrebe bezeichneten zweiten Arm (9) mit einer zweiten Längsrichtung, der zum Stabilisieren des ersten Arms (2) mit diesem lösbar verbunden ist, und ein Zwischenstück (10) zum Vermitteln der lösbaren Verbindung, das an einem der Arme (2) zwischen einer ersten und einer zweiten Verbindungsstellung um eine Achse (A) drehbar ist, wobei jede dieser Verbindungsstellungen geeignet ist, um einen Eingriff zwischen einem Kupplungselement (14) des Zwischenstücks (10) und einem Kupplungselement (15) des anderen Arms (9) herzustellen, und die Position des Kupplungselements (14) des Zwischenstücks (10) bezogen auf die Längsrichtung (L) des einen Arms (2) in den beiden Verbindungsstellungen unterschiedlich ist.

## Beschreibung

Die vorliegende Erfindung betrifft eine Aufhängung für ein Anbaugerät an einem Traktor und einen mit einer solchen Aufhängung ausgestatteten Traktor.

Traktoren sind oftmals mit einer Drei-Punkt-Aufhängung ausgestattet, die einer Kopplung von Anbaugeräten, wie beispielsweise einem Pflug, mit dem Traktor dienen. Zwei der drei Aufhängungspunkte einer solchen Drei-Punkt-Aufhängung sind durch sogenannte Unterlenker gebildet, die jeweils über einen vorderen Anschlusspunkt mit dem Traktor und über einen hinteren Anschlusspunkt mit dem Anbaugerät schwenkbar verbunden sind. Indem die Unterlenker eine feste Länge aufweisen, definieren ihre hinteren Anschlusspunkte z.B. eine Schwenkachse, um die gekoppeltes Anbaugerät auf und ab geschwenkt werden kann, um z.B. einen Plug auf dem Acker in Bodeneingriff zu halten, ihn aber im Vorgewende anzuheben, um ein Wendemanöver durchführen zu können, und anschließend wieder abzusenken, um die Bodenbearbeitung fortzusetzen.

Solange kein Anbaugerät montiert ist, sind die Unterlenker unabhängig voneinander schwenkbar, und der sowohl der Abstand ihrer hinteren Anschlusspunkte voneinander als auch die Orientierung der von ihnen definierten Schwenkachse relativ zum Heck des Traktors ist dementsprechend variabel. Um eine Ruhelage der hinteren Anschlusspunkte zu definieren, kommen sogenannte Seitenstreben zum Einsatz, die jeweils am Heck des Traktors und an dem Unterlenker angreifen. Deren Länge ist zur Anpassung an verschiedene Anbaugeräte auf eine Vielzahl von Werten einstellbar. So offenbart etwa DE 41 18 683 C1 eine Seitenstrebe gegeneinander verschiebbaren Elementen, die jeweils eine Anordnung von gleichmäßig beabstandeten Löchern aufweisen. Dadurch, dass der Abstand bei den beiden Elementen unterschiedlich ist, gibt es eine große Zahl von Stellungen, in denen Löcher der beiden Elemente miteinander überlappen und durch Einstecken eines Stifts fixierbar sind. So ist die Seitenstrebe zwar an eine große Zahl von Anbaugeräten anpassbar, doch je größer diese Zahl ist, umso schwieriger ist es, im Einzelfall die für das zu montierende Anbaugerät passende Längeneinstellung zu finden. Fehler bei der Einstellung führen dazu, dass der Abstand zwischen den Anschlusspunkten nicht zum Anbaugerät passt, und/oder dass die Schwenkachse schräg steht, so dass eine Montage des Anbaugeräts scheitert. Für eine effiziente Montage ist es daher wichtig, dass Fehler bei der Einstellung vermieden werden und eine korrekte Einstellung schnell und zuverlässig auffindbar ist.

Die Aufgabe wird gelöst durch eine Aufhängung zum Verbinden eines Anbaugeräts mit einem Traktor, wobei die Aufhängung umfasst: einen auch als Unterlenker bezeichneten ersten Arm, der ausgelegt ist, um an einem ersten Anschlusspunkt mit dem Traktor und an einem in einer ersten Längsrichtung beabstandeten zweiten Anschlusspunkt mit dem Anbaugerät verbunden zu werden, einen auch als Seitenstrebe bezeichneten zweiten Arm mit einer zweiten Längsrichtung, der zum Stabilisieren des ersten Arms mit diesem lösbar verbunden ist, und einem Zwischenstück zum Vermitteln der lösbaren Verbindung, wobei das Zwischenstück an einem der Arme zwischen einer ersten und einer zweiten Verbindungsstellung um eine Achse drehbar ist, wobei jede Verbindungsstellung geeignet ist, um einen Eingriff zwischen einem Kupplungselement des Zwischenstücks und einem Kupplungselement des anderen Arms herzustellen, und die Position des Kupplungselements des einen Arms bezogen auf dessen Längsrichtung in den beiden Verbindungsstellungen unterschiedlich ist.

Wenn der eine Arm die Seitenstrebe ist, dann ist die Wirkung der Drehung des Zwischenstücks dieselbe wie die einer Längenverstellung einer herkömmlichen Seitenstrebe wie oben beschrieben. Wenn der eine Arm der Unterlenker ist, dann entspricht die Drehung einer Verlagerung des Anlenkpunkts der Seitenstrebe am Unterlenker. Beide Veränderungen bewirken, wenn die Anschlusspunkte der Aufhängung am Traktor fest sind, eine Verlagerung des Anschlusspunkts für das Anbaugerät.

Die Drehung ermöglicht ein schnelles Umschalten zwischen einer kleinen Zahl von Längeneinstellungen, wobei allerdings durch die Verwendung eines Zwischenstücks mit angepassten Abmessungen sichergestellt werden kann, dass diese Einstellungen nur solche sind, die in einem landwirtschaftlichen Betrieb, der die Aufhängung verwendet, oder an einem Traktor, dem die Aufhängung zum Einsatz kommt, tatsächlich regelmäßig verwendet werden.

Die Eignung der Aufhängung für die Montage beliebiger Anbaugeräte an beliebigen Traktoren muss dabei nicht verloren gehen, wenn überdies die Seitenstrebe in an sich bekannter Art, insbesondere wie oben beschrieben, längenverstellbar ist.

Die Achse sollte unter einem nichtverschwindenden, vorzugsweise im Wesentlichen rechten, Winkel zur Längsrichtung des einen Arms orientiert sein. Je näher der Winkel am rechten Winkel ist, umso stärker ist die aus der Drehung resultierende Verlagerung des Anschlusspunkts für das Anbaugerät.

Von den Kupplungselementen kann eines eine Öse und das andere ein in die Öse einführbarer Stift sein.

Eine von Öse und Stift definierte Steckachse ist vorzugsweise senkrecht zur Achse orientiert, da dann die beiden Verbindungsstellungen realisiert werden können, indem das Zwischenstück um die Achse um 180° gedreht wird und in beiden Verbindungsstellungen der Stift in dieselbe Öse eingeführt wird.

Das Zwischenstück sollte an dem einen Arm wenigstens zeitweilig in Richtung der Achse gesichert sein, damit nicht eine Verschiebung des Zwischenstücks in Richtung der Achse zu einer ungewollten und bei der Montage hinderlichen Verlagerung des Anschlusspunkts für das Anbaugerät führen kann.

Einer bevorzugten Ausgestaltung zufolge umfasst das Zwischenstück einen Kopf, an dem das Kupplungselement des Zwischenstücks, vorzugsweise eine Öse, gebildet ist, und einen Schaft, dessen Eingriff in eine Öffnung des einen Arms die Achse definiert.

Um das Platzieren des Zwischenstücks in einer zum Verbinden der Kupplungselemente geeigneten Orientierung zu erleichtern, sollte wenigstens eine der Verbindungsstellungen durch einen formschlüssigen Eingriff des Zwischenstücks an dem einen Arm definiert sein.

Wenn der Schaft des Zwischenstücks ein Gewinde aufweist, kann ein in Richtung der Achse gesicherter Zustand des Zwischenstücks realisiert werden, indem der eine Arm zwischen dem Kopf des Zwischenstücks und einer auf das Gewinde aufgeschraubten Mutter geklemmt ist.

Die Aufgabe wird ferner gelöst durch einen Traktor mit einer Aufhängung, , vorzugsweise zwei komplementären Aufhängungen für ein Anbaugerät, wie oben beschrieben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: die Heckpartie eines Traktors mit Dreipunkt-Aufhängung;
- Fig. 2: ein isoliertes Zwischenstück der erfindungsgemäßen Aufhängung;
- Fig. 3: das am Unterlenker montierte Zwischenstück; und
- Fig. 4: Ansichten der Aufhängung in verschiedenen Stellungen des Zwischenstücks.

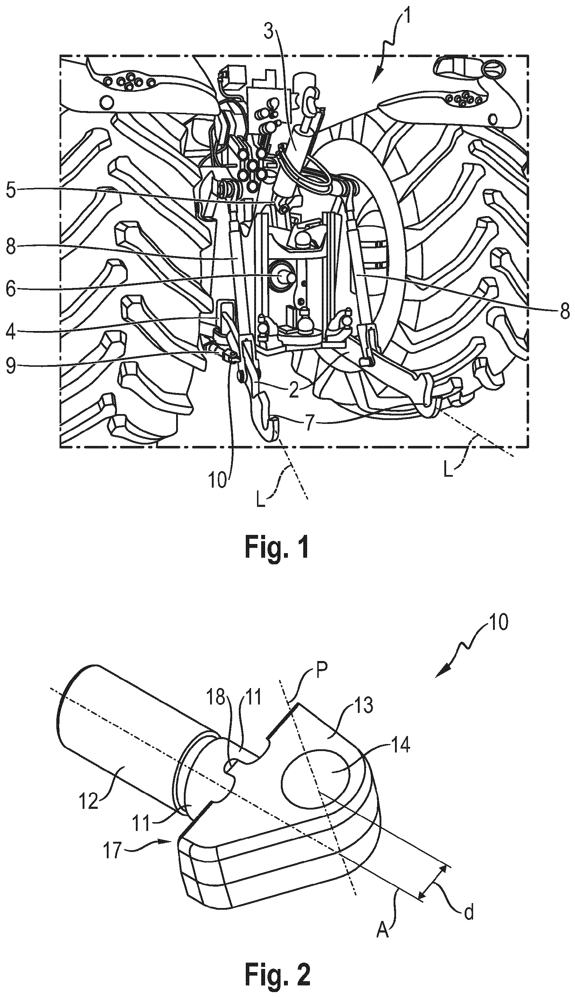

Fig. 1 zeigt in perspektivischer Ansicht die Heckpartie eines Traktors 1. Eine Dreipunkt-Aufhängung für ein nicht dargestelltes Anbaugerät umfasst in an sich bekannter Weise zwei Unterlenker 2 und einen Oberlenker 3. Anschlusspunkte 4 der Unterlenker 2 und 5 des Oberlenkers 3 am Heck des Traktors 1 definieren ein Dreieck, in dessen Mitte sich ein Zapfwellenanschluss 6 befindet.

Die Unterlenker 2 sind an ihren Anschlusspunkten 4 horizontal und vertikal schwenkbar. Um die Position eines Anschlusspunkts 7 für das Anbaugerät am hinteren Ende jedes Unterlenkers 2 in der Vertikalen festzulegen, sind Halter 8 jeweils oberhalb der Anschlusspunkte 4 an Heck des Traktors und an intermediären Punkten der Unterlenker 2 angelenkt. Eine gerade Linie durch die Anschlusspunkte 4 und 7 definiert eine Längsrichtung eines jeden Unterlenkers 2, in Fig. 1 jeweils dargestellt als hinter die Anschlusspunkte 7 hinaus verlängerte strichpunktierte Linien L.

Zur Festlegung der Unterlenker 2 in der Horizontalen dienen Seitenstreben 9, von denen in Fig. 1 nur eine sichtbar ist. Die zueinander spiegelbildlichen Seitenstreben 9 erstrecken sich jeweils zwischen einem Anschlusspunkt am Heck in etwa derselben Höhe wie die Anschlusspunkte 4, und einem Zwischenstück 10, das am Unterlenker 2 beabstandet von dessen Anschlusspunkt 4 angeordnet ist.

Fig. 2 zeigt das Zwischenstück 10 in einer perspektivischen Ansicht. Ein zylindrischer Schaft 11 ist vorgesehen, um in einer in den Figuren nicht sichtbaren Bohrung eines der Unterlenker 2 aufgenommen zu werden, wobei der Kontakt des Schafts 11 mit den Wänden der Bohrung eine Achse A definiert, um die das Zwischenstück 10 relativ zum Unterlenker 2 drehbar ist, sofern es nicht, wie im Folgenden noch beschrieben, drehfest fixiert ist. Die Achse A verläuft im Wesentlichen senkrecht zur Längsrichtung L in einer von der Längsrichtung L und einer die Anschlusspunkte des Unterlenkers 2 und der Seitenstrebe 9 am Traktor 1 verbindenden Linie aufgespannten Ebene.

Der Schaft 11 ist an einem Ende verlängert durch einen Gewindeabschnitt 12; am anderen ist er verbunden mit einem Kopf 13. Der Kopf 13 hat hier eine Gestalt ähnlich einem Dreieckprisma. Zwischen den zwei Stirnflächen des Prismas erstreckt sich eine Öse 14, eine zu der Öse 14 benachbarte Kante des Prismas ist konzentrisch zur Öse 14 abgerundet. Die Öse 14 definiert eine Schwenkachse P. Die Schwenkachse P steht senkrecht auf der von der Längsrichtung L und der Achse A aufgespannten Ebene. Ein nichtverschwindender Abstand zwischen der Achse A und der Schwenkachse P ist mit d bezeichnet.

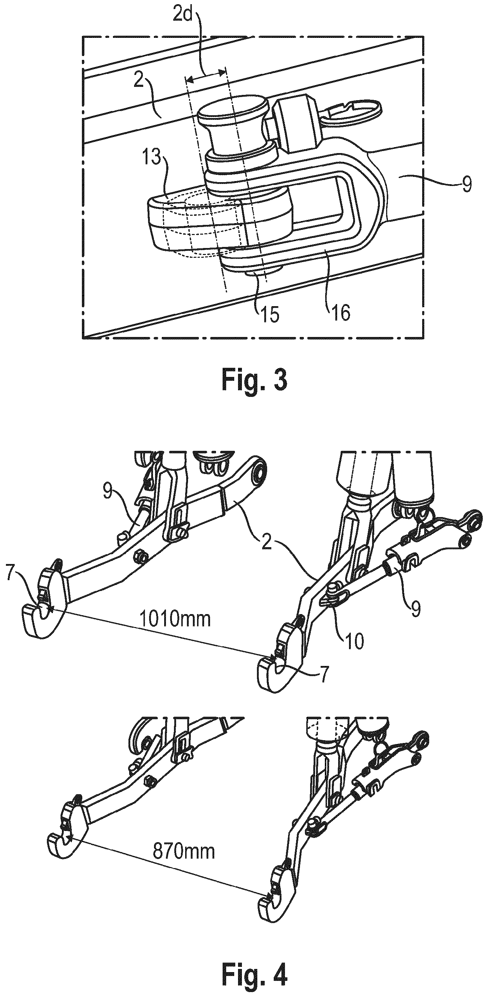

Die Öse 14 ist vorgesehen, um einen Stift 15 aufzunehmen, der wie in Fig. 3 gezeigt, von einer Gabel 16 am Ende der Seitenstrebe 9 gehalten ist. Wenn der Stift 15 aus der Öse 14 herausgezogen und die Gabel 16 vom Kopf 13 abgerückt ist, ist das Zwischenstück 10 um die Achse A in eine in Fig. 3 gestrichelt gezeigte Stellung drehbar, in der die Öse 14 gegenüber der ursprünglichen Stellung entlang des Unterlenkers 2 um eine Entfernung 2d verschoben ist.

Aus dieser Verschiebung resultierende Positionen der Unterlenker 2 sind in Fig. 4 gezeigt. In der oberen Abbildung der Figur ist der Stift 15 in die Öse 14 des Kopfs 13 in derselben Orientierung eingesteckt wie in Fig. 3; in der anderen Orientierung des Kopfes 13, in der der Stift 15 die Öse 14 durchsetzen kann, ist diese in der Längsrichtung L um den Abstand 2d zum Anschlusspunkt 7 hin verschoben, und dementsprechend ist der Abstand zwischen den hinteren Anschlusspunkten 7 der beiden Unterlenker 2 vergrößert. Der Abstand d und die Position der das Zwischenstück 10 aufnehmenden Bohrung am Unterlenker 2 sind so gewählt, dass die in den beiden Orientierungen des Zwischenstücks 10 resultierenden Abstände der hinteren Anschlusspunkte 7 jeweils gängigen Breiten von Anbaugeräten, z.B. 870 mm und 1010 mm, entsprechen.

Die Seitenstreben 9 können in an sich bekannter Weise elastisch stauchbar sein, um bei der Montage eines Anbaugeräts, wenn nötig, den Abstand zwischen den Anschlusspunkten 7 zeitweilig vergrößern zu können; infolge der Elastizität stellt sich der Ruheabstand von hier 870 mm bzw. 1010 mm selbsttätig wieder her, wenn die Unterlenker 2 nicht durch ein äußeres Hindernis blockiert sind.

Andere Paare von jeweils durch Drehen der Zwischenstücke 10 einstellbaren Abständen zwischen den Anschlusspunkten 7 können vorgegeben werden, wenn die Seitenstreben 9 selber wie etwa im eingangs zitierten Stand der Technik beschrieben längenverstellbar sind.

Wiederum bezogen auf Fig. 2 ist eine von der Öse 14 abgewandte Grundfläche 17 des Kopfes 13 vorgesehen, um an eine seitliche Flanke des Unterlenkers 2 angepresst zu werden und das Zwischenstück 10 drehfest am Unterlenker 2 zu fixieren, wenn eine in der Figur nicht gezeigte, auf den Gewindeabschnitt 12 aufgeschraubte Mutter an der gegenüberliegenden Flanke des Unterlenkers 2 festgezogen wird. Wenn die Mutter festgezogen wird, bevor der Stift 15 das Zwischenstück 10 mit der Seitenstrebe 9 verbindet, kann der Fall auftreten, dass die von der Öse 14 und der Gabel 16 festgelegten Achsen P nicht übereinstimmen und der Stift 15 nicht eingeführt werden kann. Ist hingegen das Zwischenstück 14 in der Bohrung des Unterlenkers 2 frei um die Achse A drehbar, dann kann eine Neigung des Zwischenstücks 10, sich um die Achse A zu drehen, sobald es losgelassen wird, das Koppeln des Zwischenstücks 10 an die Seitenstrebe 9 erschweren. Um dies zu vermeiden, kann an der Grundfläche 17 ein Vorsprung 18 vorgesehen sein, der in eine komplementäre Aussparung an der Flanke des Unterlenkers 2 eingreift und die Drehbewegungsfreiheit des Zwischenstücks 10 begrenzt, wenn die Mutter am Gewindeabschnitt 12 noch nicht komplett festgezogen ist.

### Bezugszeichen

- 1: Traktor
- 2: Unterlenker
- 3: Oberlenker
- 4: Anschlusspunkt
- 5: Anschlusspunkt
- 6: Zapfwellenanschluss
- 7: Anschlusspunkt
- 8: Halter
- 9: Seitenstrebe
- 10: Zwischenstück
- 11: Schaft
- 12: Gewindeabschnitt
- 13: Kopf
- 14: Öse
- 15: Stift
- 16: Gabel
- 17: Grundfläche
- 18: Vorsprung

## Patentansprüche

1. Aufhängung zum Verbinden eines Anbaugeräts mit einem Traktor (1), wobei die Aufhängung umfasst: einen als auch Unterlenker bezeichneten ersten Arm (2), der ausgelegt ist, um an einem ersten Anschlusspunkt (4) mit dem Traktor (1) und an einem in einer ersten Längsrichtung (L) beabstandeten zweiten Anschlusspunkt (7) mit dem Anbaugerät verbunden zu werden, einen auch als Seitenstrebe bezeichneten zweiten Arm (9) mit einer zweiten Längsrichtung, der zum Stabilisieren des ersten Arms (2) mit diesem lösbar verbunden ist, und ein Zwischenstück (10) zum Vermitteln der lösbaren Verbindung,
**dadurch gekennzeichnet, dass** das Zwischenstück (10) an einem der Arme (2) zwischen einer ersten und einer zweiten Verbindungsstellung um eine Achse (A) drehbar ist, wobei jede Verbindungsstellung geeignet ist, um einen Eingriff zwischen einem Kupplungselement (14) des Zwischenstücks (10) und einem Kupplungselement (15) des anderen Arms (9) herzustellen, und die Position des Kupplungselements (14) des Zwischenstücks (10) bezogen auf die Längsrichtung (L) des einen Arms (2) in den beiden Verbindungsstellungen unterschiedlich ist.

2. Aufhängung nach Anspruch 1, bei der die Seitenstrebe (9) längenverstellbar und/oder elastisch längenveränderlich ist.

3. Aufhängung nach Anspruch 1 oder 2, bei der die Achse (A) unter einem nichtverschwindenden, vorzugsweise im Wesentlichen rechten, Winkel zur Längsrichtung (L) des einen Arms (2) orientiert ist.

4. Aufhängung nach einem der vorhergehenden Ansprüche, bei der eines der Kupplungselemente eine Öse (14) und das andere ein Stift (15) ist.

5. Aufhängung nach Anspruch 4, bei der die Öse (14) und der Stift (15) eine Steckachse (P) definieren, die senkrecht zur Achse (A) orientiert ist.

6. Aufhängung nach einem der vorhergehenden Ansprüche, bei dem das Zwischenstück (10) an dem einen Arm (2) wenigstens zeitweilig in Richtung der Achse (A) gesichert ist.

7. Aufhängung nach einem der vorhergehenden Ansprüche, bei dem das Zwischenstück (10) einen Kopf (13), an dem das Kupplungselement (14) des Zwischenstücks (10) gebildet ist, und einen Schaft (11) umfasst, dessen Eingriff in eine Öffnung des einen Arms (2) die Achse (A) definiert.

8. Aufhängung nach Anspruch 7, bei dem wenigstens eine der Verbindungsstellungen durch einen formschlüssig gegen Drehung gesicherten Eingriff des Zwischenstücks (10) an dem einen Arm (2) definiert ist.

9. Aufhängung nach Anspruch 7 oder 8, bei der der Schaft (11) ein Gewinde (12) aufweist und in einem gesicherten Zustand der eine Arm (2) zwischen dem Kopf (13) und einer auf das Gewinde (12) aufgeschraubten Mutter geklemmt ist.

10. Traktor (1) mit wenigstens einer Aufhängung, vorzugsweise zwei komplementären Aufhängungen für ein Anbaugerät, nach einem der vorhergehenden Ansprüche.
